**Europäisches Patentamt**

**European Patent Office**

**Office européen des brevets**

(11) Veröffentlichungsnummer: **0 277 564 B1**

# (12) EUROPÄISCHE PATENTSCHRIFT

(45) Veröffentlichungstag der Patentschrift: **28.10.92**

(21) Anmeldenummer: **88100925.2**

(22) Anmeldetag: **22.01.88**

(51) Int. Cl.⁵: **G11B 5/53**, G11B 5/008

(54) **Recorder für eine matrixartige Aufzeichnung.**

(30) Priorität: **31.01.87 DE 3702858**

(43) Veröffentlichungstag der Anmeldung:
**10.08.88 Patentblatt 88/32**

(45) Bekanntmachung des Hinweises auf die
Patenterteilung:
**28.10.92 Patentblatt 92/44**

(84) Benannte Vertragsstaaten:
**AT BE CH DE ES FR GB GR IT LI LU NL SE**

(56) Entgegenhaltungen:
**EP-A- 0 197 333**
**DE-A- 3 516 107**
**GB-A- 1 476 819**

**PATENT ABSTRACTS OF JAPAN vol. 10, no.
180 (P-471)(2236) 24 Juni 1986, & JP-A-61
029401 (SANYO ELECTRIC CO) 10 Februar
1986,**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Platte, Hans-Joachim, Dr. Ing.
Königsberger Weg 22
W-3005 Hemmingen 4(DE)**
Erfinder: **Uhde, Dietmar, Dipl.-Ing.
Weiherstrasse 11
W-7744 Königsfeld(DE)**

## Beschreibung

Bei der sogenannten matrixartigen Aufzeichnung gemäß der DE-OS 35 09 584 werden mit einem rotierenden und in Achsrichtung eine Hubbewegung ausführenden Kopfrad auf einem Magnetband Blöcke mit etwa parallel zur Bandkante verlaufenden, gegenüber der Bandlänge kurzen Spuren geschrieben. Diese Art der Aufzeichnung mit matrixartigen, in Bandlängsrichtung aufeinanderfolgenden Blöcken eignet sich insbesondere für die Aufzeichnung von digitalen Bild- und Tonsignalen und ermöglicht eine bessere Segmentierung der Signale für Sonderfunktionen.

Es ist dabei bekannt, mit zwei parallel arbeitenden Abtastsystemen das Magnetband je über die halbe Breite mit zwei Signalen zu beschrieben, z.B. einem hochauflösenden Fernsehsignal (HDTV). Bei dieser Lösung sind also zwei synchron arbeitende rotierende Köpfe oder Gruppen von Köpfen erforderlich.

Der Erfindung liegt die Aufgabe zugrunde, für die beschriebene matrixartige Aufzeichnung eine Kopftrommel zu schaffen, mit der auch bei unvermeidbaren Toleranzen beide Spurbahnen synchron und einwandfrei gelesen werden können.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgenden Erkenntnissen und Überlegungen. Beim Lesevorgang bereits geschriebener Spuren kann durch Nachsteuerung der Hubbewegung des rotierenden Kopfrades mit einem aus einem Spurführungssignal gewonnenen Signal erreicht werden, daß die Köpfe des Kopfrades genau den auf dem Band geschriebenen Spuren folgen. Durch mechanische Toleranzen wie z.B. in der Temperatur, dem Bandzug und der Banddehnung ist damit aber nicht sichergestellt, daß dann gleichzeitig die Köpfe der zweiten Gruppe von Köpfen den Spuren der anderen Spurbahn folgen. Deshalb werden erfindungsgemäß die Köpfe der zweiten Gruppe von Köpfen durch den Aktuator in Achsrichtung der Kopftrommel dynamisch so nachgesteuert, daß auch diese Köpfe genau den geschriebenen Spuren der zweiten Spurbahn folgen. Die Nachsteuerung erfolgt dabei durch eine Spannung, die aus einem abgetasten Spurführungssignal gewonnen wird. Die Lage der zweiten Gruppe von Köpfen in Axialrichtung der Kopftrommel paßt sich also dynamisch an die Lage der ersten Gruppe von Köpfen so an, daß die Köpfe der ersten Gruppe einwandfrei die Spuren der ersten Spurbahn und gleichzeitig die Köpfe der zweiten Gruppe einwandfrei die Spuren der zweiten Spurbahn auf den Magnetband lesen.

Bei einer Ausführungsform der Erfindung erfolgt diese Steuerung der Köpfe der zweiten Gruppe um einen solchen Betrag, der kleiner oder gleich der Breite einer halben Spur ist, daß die Köpfe jeweils genau einer Spur folgen, ohne Rücksicht darauf, ob die Köpfe der ersten Gruppe und die Köpfe der zweiten Gruppe in den beiden Spurbahnen Spuren gleicher Ordnungszahl abtasten und somit die zeitliche Korrelation der abgetasteten Signale stimmt. Eine bei der Wiedergabe verbleibende Zeitabweichung zwischen den gewonnenen Signalen, vorzugsweise um ein Mehrfaches von Spuren, kann durch Speicher bei der Wiedergabe ausgeglichen werden. Derartige Speicher bei der Wiedergabe sind bei der Verarbeitung von digitalen Signalen ohnehin erforderlich. Bei dieser Lösung ist es sinnvoll und ausreichend, den Aktuator auf einen Hubbereich von +/- eine halbe Spurbreite zu bemessen.

Bei einer anderen Ausführungsform erfolgt die Nachsteuerung der Köpfe der zweiten Gruppe über einen solchen Hubbereich, daß bei der Wiedergabe in den beiden Spurbahnen stets Spuren gleicher Ordnungszahl abgetastet werden und die beiden abgetasteten Signale von den beiden Spurbahnen zeitlich übereinstimmen.

Das durch die Erfindung erreichte gleichzeitige synchrone und korrelierte Lesen der beiden Spurbahnen ermöglicht eine größere Vielfalt in der Art der Aufzeichnung der Signale. Es können zwei Signale jeweils gleichzeitig geschrieben und gelesen werden, die bei der Wiedergabe in ihrer zeitlichen Lage übereinstimmen müssen. Dabei kann im Bedarfsfalle auch jede Spurbahn für sich gelesen werden. Der Recorder kann also auch dazu dienen, auf den beiden Spurbahnen nicht zueinander korrelierte Signale aufzuzeichnen und diese zeitlich nacheinander zu lesen. Der Recorder ist besonders dafür geeignet, zu dem auf der ersten Spurbahn geschriebenen Signal ein ergänzendes Signal oder ein Ersatzsignal aufzuzeichnen, das z.B. eine Verbesserung des Signals der ersten Spurbahn bringt, z.B. zur Aufzeichnung eines ergänzenden Signals für eine Fernsehwiedergabe mit erhöhter Auflösung (HDTV). Bei Wahl der Betriebsart "Höhere Auflösung" würden dann beide Spurbahnen gleichzeitig parallel genutzt, wobei eine vorgegebenen Kassette dann nur die halbe Spielzeit aufweist. In der Betriebsart "Normale Auflösung" würde die eine Spurbahn nur in Hinrichtung, die andere Spurbahn nur in Rückrichtung genutzt, womit sich die doppelte Spielzeit der Betriebsart "Normale Auflösung" ergäbe. Es ergibt sich also eine kompatible Austauschbarkeit von Auflösung und Spielzeit. Das Signalformat kann in den beiden Bahnen identisch und somit vollkommen kompatibel sein.

Die Erfindung wird in folgenden anhand der Zeichnung an einem Ausführungsbeispiel erläutert. Darin zeigen

Fig. 1    im Prinzip das Zusammenwirken der Kopftrommel mit dem Magnetband und

Fig. 2    eine konstruktive Ausbildung der Kopftrommel und ihres Antriebes.

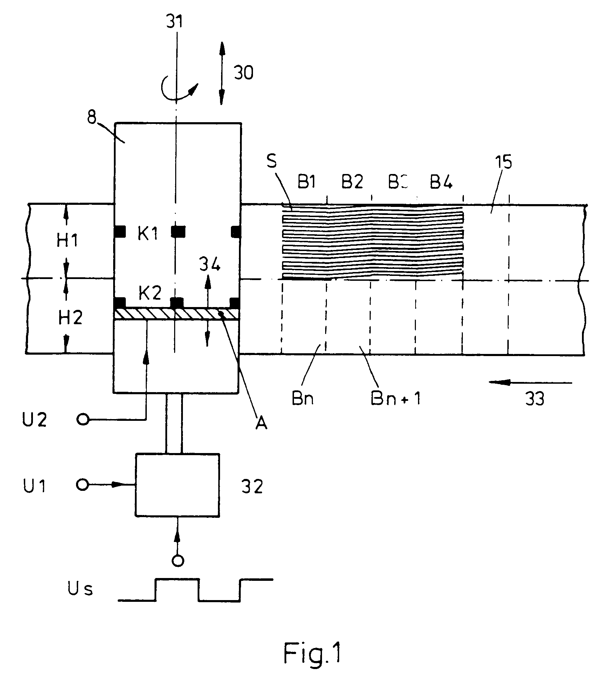

In Fig. 1 wird das Magnetband 15 in Richtung 33 an der rotierenden Kopftrommel 8 vorbeigeführt, indem es diese über einen Winkel von etwa 180° umschlingt. Die Kopftrommel 8 wird von dem Antriebsmotor 32 in Rotation versetzt und gleichzeitig mittels einer Steuerspannung Us periodisch in Richtung der Achse 31 in Sinne einer Hubbewegung 30 über die halbe Bandbreite H1 = H2 bewegt. Dabei schreibt oder liest die erste Gruppe K1 von Köpfen auf dem Magnetband 15 aufeinanderfolgende Blöcke B1, B2... mit annähernd parallel zur Bandkante verlaufenden Spuren S. Die Hubbewegung 30 wird dabei beim Lesevorgang durch eine aus einem Spurführungssignal gewonnene Spannung U1 zusätzlich so gesteuert, daß die Köpfe genau den geschriebenen Spuren folgen.

Gleichzeitig schreibt oder liest die Gruppe K2 von Köpfen auf der unteren Bandhälfte H2 entsprechende Blöcke Bn, Bn + 1... usw. Beim Schreibvorgang sind noch keine Spuren auf dem Band 15 vorgegeben, so daß die genaue Lage der Köpfe der Gruppe K2 nicht nachgeführt werden muß. Der Abstand beider Gruppen muß jedoch für eine Austauschbarkeit von Bändern recht genau reproduzierbar eingestellt werden. Beim Lesevorgang werden die Köpfe der Gruppe K1 durch die Spannung U1 genau entlang den Spuren S in der oberen Bandhälfte H1 geführt. Ohne zusätzliche Maßnahmen würden durch Toleranzen des Bandes bzgl. seiner Querabmessung die Köpfe der Gruppe K2 nicht genau auf den Spuren auf der unteren Bandhälfte H2 verlaufen. Im Idealfall würde ein solcher "Offset" der Köpfe der Gruppe K2 recht konstant sein, da beide Gruppen von Köpfen durch das Spurführungssignal der Köpfe K1 geführt werden. Deshalb ist die Gruppe K2 von Köpfen auf einem symbolisch angedeuteten Aktuator A angeordnet, der eine geringfügige Verstellung der Gruppe K2 in Richtung 34 ermöglicht. Der Aktuator ist vorzugsweise ein piezoelektrischer Aktuator, wie er zur Steuerung der Köpfe bei Videorecordern bekannt ist. Derartige Aktuatoren werden auch als "Bimorph" oder als "Dickenschwinger" bezeichnet. Der Aktuator A wird von einer Spannung U2 gesteuert, die aus einem Spurführungssignal auf der Bandhälfte H2 abgeleitet ist. Die Gruppe K1 wird also durch Steuerung der Hubbewegung 30 durch die Spannung U1 auf korrekte Spurfolge in der Bandhälfte H1 und additiv die Gruppe K2 mit dem Aktuator A auf korrekte Spurfolge in der Bandhälfte H2 gesteuert. Vorzugsweise erhalten alle Köpfe der Gruppe K2 durch die Spannung U2 dieselbe Abstandsänderung von der Ebene der Gruppe K1 durch einen gemeinsamen Aktuator A. Die einzelnen Köpfe der Gruppe K2 können auch auf getrennten Aktuatoren A angeordnet sein, die dann von der gleichen Spannung U2 gesteuert werden. Die Spannung U2 wird als Kopfsignale übertragenden Wirklungen des Drehübertragers übertragen. Die Entkopplung des Aktuatorsignals U2 kann über eine einfache Tiefpaßfilterung auf der Kopftrommel 8 erfolgen.

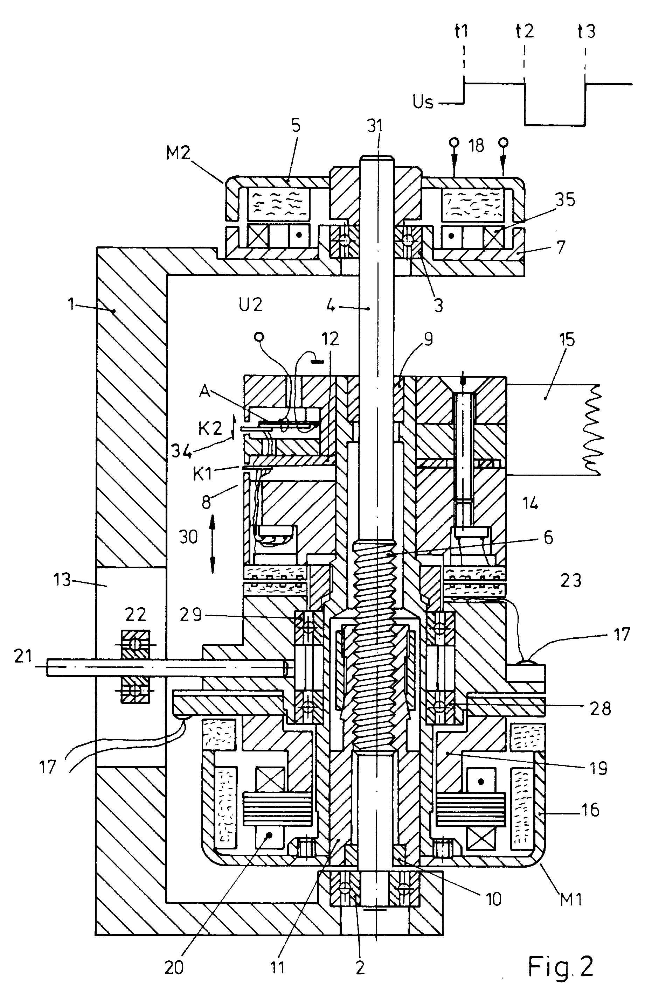

Fig. 2 zeigt eine konstruktive Ausführung der Kopftrommel 8 und des Antriebs 32 für die Rotation und die Hubbewegung 30 in Fig. 1. In dem ortsfesten Rahmen 1 ist mittels der Lager 2, 3 die die Gewindespindel 6 tragende Welle 4 drehbar, aber axial unverschiebbar gelagert. Das obere Ende der Welle 4 ist mit dem Rotor 5 des Motors M2 verbunden, dessen Stator 7 fest mit dem Rahmen 1 verbunden ist. Das Kopfrad 8, das die Kopfscheibe 12, die erste Gruppe K1 von Köpfen und die Trommel 14 enthält, ist über die Gleitlager 9, 10 drehbar auf der Welle 4 gelagert. Dabei greift die Gewindespindel 6 in die fest mit der Trommel 14 verbundene Mutter 11 ein. Das Magnetband 15 ist um das Kopfrad 8 herumgeführt, z.B. über einen Winkel von 180°. Zusätzlich zu der Gruppe K1 von Köpfen enthält die Kopftrommel 8 die Gruppe K2 von Köpfen, die über den Aktuator A an der Kopftrommel 8 gelagert sind. Dem Aktuator A wird wie in Fig. 1 die Spannung U2 für die Verstellung in Richtung 34 zugeführt. Die Signale werden von den beiden Kopfgruppen K1, K2 über rotierende Übertrager 23 und flexible Leitungen 17 den Aufnahme- oder Wiedergabeverstärkern zugeführt. Es können auch für die Gruppen K1, K2 getrennte Übertrager vorgesehen sein. Diese sind dann vorzugsweise radial, axial oder sowohl radial als auch axial gegeneinander versetzt an der Kopftrommel 8 angeordnet. An der Trommel 14 ist außerdem der Rotor 16 des Motors M1 befestigt. Der Stator 19 des Motors M1 ist über die Lager 28, 29 auf der Trommel 14 relativ zu dieser drehbar gelagert und enthält die Statorwicklung 20. Der Stator 19 ist über den Stift 21 und das Lager 22 so mit dem Rahmen 1 verbunden, daß der Stift 21 in dem Schlitz 13 des Rahmens 1 in Achsialrichtung 31 bewegbar ist, jedoch eine Drehung des Stators 19 verhindert.

Die Teile 9, 10, 11, 12, K1, K2, 14, 16 bilden den um die Achse 31 rotierenden Teil der Kopfradanordnung. Die Teile 19, 20, 21, 30 bilden den Teil der Kopfradanordnung, der nicht rotieren kann, aber entsprechend der Hubbewegung in Richtung der Achse 31 verschiebbar ist.

Die Wirkungsweise ist folgende: Der Motor M1 wird mit einer Geschwindigkeit von etwa 6000 Upm angetrieben, so daß das Kopfrad 8 mit dieser Drehzahl um die Achse 31 rotiert. Die Welle 4 mit der Gewindespindel 6 wird durch den Motor M2 in der gleichen Richtung wie das Kopfrad 8 und mit der gleichen Umdrehungszahl angetrieben. Wegen der gleichen Umdrehungszahlen besteht zwischen der Gewindespindel 6 und der Mutter 11 keine Relativbewegung, so daß das Kopfrad 8 rotiert, in Richtung der Achse 31 jedoch nicht bewegt wird. In Fig. 2 ist dieser Zustand vor t1 angedeutet. In Zeitpunkt t1 wird die über die Klemmen 18 an die Wicklung 35 angelegte Steuerspannung Us erhöht, so daß der Motor M2 schneller läuft, z.B. mit 6010 Upm. Dadurch dreht sich die Gewindespindel 6 in die Mutter 11 langsam hinein, so daß das Kopfrad 8 in erwünschter Weise eine Hubbewegung 30 nach unten ausführt. Im Zeitpunkt t2 werden die Steuerspannung Us und damit die Drehzahl der Gewindespindel 6 entsprechend verringert, so daß die Gewindespindel 6 sich aus der Mutter 11 herausdreht und das Kopfrad 8 in Hubrichtung 30 nach oben bewegt wird. Der Amplitudensprung der Spannung Us bei t1, t2, t3 bestimmt also die Geschwindigkeit der Hubbewegung 30 und die Dauer t1-t2 oder t2-t3 die Amplitude der Hubbewegung 30.

Für den Motor M1 wird ein eisenloser, elektronisch kommutierter sogenannter Luftspulenmotor verwendet und für den Motor M2 ein elektronisch kommutierter Flachläufer. Es können jedoch auch mechanisch kommutierte Motoren, Ankermotoren und dgl. verwendet werden.

Der Aktuator A steuert wie in Fig. 1 die Lage der Gruppe K2 von Köpfen in Richtung 34 dynamisch derart, daß bei korrekter Spurfolge der Gruppe K1 auf der Bandhälfte H1 auch die Gruppe K2 exakt den Spuren auf der Bandhälfte H2 folgt. Bei Aufnahme wird der Aktuator A stromlos geschaltet, d.h. die Spannung U2 hat dann einen konstanten Wert, der den gewünschten Sollabstand in Axialrichtung zwischen den beiden Gruppen K1, K2 bewirkt. Dieser Abstand ist etwa gleich der halben Breite des Magnetbandes 15, also = H1 = H2. Bei Wiedergabe wird der Aktuator A in Idealfall nach dem Start einmal eingestellt, und zwar auf eine solche Auslenkung, daß die beiden jeweils gleichzeitig aktiven Magnetköpfe optimal auf je einer Spur der beiden Bandhälften H1, H2 laufen. Nach dieser Einstellung könnte im theoretischen Idealfall die Spurführung gemeinsam erfolgen, wobei die Referenz aus den Spuren von nur einer Bandhälfte erfolgen würde.

**Patentansprüche**

1. Recorder für eine matrixartige Aufzeichnung, bei der mit einer rotierenden und in Achsrichtung eine Hubbewegung (30) ausführenden Kopftrommel (8) auf einem Magnetband (15) Blöcke (B) mit etwa parallel zur Bandkante verlaufenden, gegenüber der Bandlänge kurzen Spuren (S) geschrieben werden, wobei an der Kopftrommel (8) in Achsrichtung (31) versetzt eine erste (K1) und eine zweite (K2) Gruppe von Köpfen vorgesehen ist, dadurch gekennzeichnet, daß die beiden Gruppen mittels eines elektromechanischen Aktuators (A) in Achsrichtung (31) gegeneinander verstellbar an der Kopftrommel (8) gelagert sind.

2. Recorder nach Anspruch 1, dadurch gekennzeichnet, daß der Aktuator (A) und/oder die Hubbewegung (30) durch eine Stellgröße (U2, U1) gesteuert ist, die aus einem vom Band (15) abgetasteten Spurführungssignal gewonnen ist.

3. Recorder nach Anspruch 1, dadurch gekennzeichnet, daß die Hubbewegung (30) so gesteuert ist, daß die erste Gruppe (K1) von Köpfen den auf einer ersten Hälfte (H1) des Bandes (15) geschriebenen Spuren (S) folgt.

4. Recorder nach Anspruch 3, dadurch gekennzeichnet, daß gleichzeitig mit der Steuerung der ersten Gruppe von Köpfen über das Spurführungssignal der Aktuator (A) so gesteuert ist, daß die zweite Gruppe (K2) von Köpfen den auf der zweiten Hälfte (H2) des Bandes (15) geschriebenen Spuren folgt ohne Berücksichtigung von deren Ordnungszahl relativ zu der Ordnungszahl der gleichzeitig von der ersten Gruppe (K1) von Köpfen auf der ersten Hälfte (H1) des Bandes gelesenen Spuren.

5. Recorder nach Anspruch 3, dadurch gekennzeichnet, daß der Aktuator (A) so gesteuert ist, daß beide Gruppen (K1, K2) von Köpfen auf den beiden Hälften (H1, H2) des Bandes (15) stets Spuren (S) gleicher Ordnungszahl lesen.

6. Recorder nach Anspruch 4, dadurch gekennzeichnet, daß bei der Wiedergabe Unterschiede in der zeitlichen Ordnungszahl der von den beiden Gruppen (K1, K2) von Köpfen gleichzeitig gelesenen Signale durch Speicher ausgeglichen werden.

7. Recorder nach Anspruch 1, dadurch gekennzeichnet, daß die Köpfe der zweiten Gruppe (K2) an getrennten Aktuatoren (A) oder einem gemeinsamen Aktuator (A) angeordnet sind.

8. Recorder nach Anspruch 7, dadurch gekennzeichnet, daß die getrennten Aktuatoren (A) identisch und mit dem gleichen Signal (U2) gesteuert sind.

9. Recorder nach Anspruch 1, dadurch gekennzeichnet, daß der Abstand der beiden Gruppen (K1,K2) von Köpfen in Achsrichtung (31) der Kopftrommel (8) etwa gleich der halben geometrischen Breite (H1, H2) des Bandes (15) ist.

10. Recorder nach Anspruch 1, dadurch gekennzeichnet, daß bei Aufnahme die Steuerung des Aktuators (A) abgeschaltet ist.

## Claims

1. Recorder for a matrix type recording in which blocks (B) are written on a magnetic tape (15) in tracks (S) that are approximately parallel to the edge of the tape and that are short relative to the length of the tape, with a rotating head drum (8) that effects a sweeping motion (30) in the axial direction, wherein a first (K1) and a second (K2) group of heads, displaced in the axial direction (31), is provided on the head drum (8), characterised in that, the two groups are mounted on the head drum (8), displaceable relative to each other in the axial direction (31) by means of an electromechanical actuator (A).

2. Recorder in accordance with Claim 1, characterised in that, the actuator (A) and/or the sweeping motion (30) is controlled by an adjusting value (U2, U1) which is obtained from a tracking control signal sampled from the tape (15).

3. Recorder in accordance with Claim 1, characterised in that, the sweeping motion (30) is controlled such that the first group (K1) of heads follows the tracks (S) written on a first half (H1) of the tape (15).

4. Recorder in accordance with Claim 3, characterised in that, simultaneously with the control of the first group of heads by the tracking control signal, the actuator (A) is controlled such that the second group (K2) of heads follows the tracks written on the second half (H2) of the tape (15) without regard to their ordinal number relative to the ordinal number of the tracks read from the first half (H1) of the tape by the first group (K1) of heads.

5. Recorder in accordance with Claim 3, characterised in that, the actuator (A) is controlled such that both groups (K1, K2) of heads always read tracks (S) of similar ordinal number on the two halves (H1, H2) of the tape (15).

6. Recorder in accordance with Claim 4, characterised in that, during the reproduction, differences in the temporal ordinal number of the signals read at the same time by the two groups (K1, K2) of heads are balanced out by stores.

7. Recorder in accordance with Claim 1, characterised in that, the heads of the second group (K2) are arranged on separate actuators (A) or on a common actuator (A).

8. Recorder in accordance with Claim 7, characterised in that, the separate actuators (A) are identical and are controlled by the same signal (U2).

9. Recorder in accordance with Claim 1, characterised in that, the distance between the two groups (K1, K2) of heads in the axial direction (31) of the head drum (8) is approximately equal to half the geometrical width (H1, H2) of the tape (15).

10. Recorder in accordance with Claim 1, characterised in that, during recording, the control of the actuator (A) is turned-off.

## Revendications

1. Enregistreur pour un enregistrement de type matriciel dans lequel des blocs (B) sont enregistrés avec des pistes courtes (S) par rapport à la longueur de la bande qui sont approximativement parallèles au bord de la bande avec un tambour de têtes (8) rotatif qui effectue un mouvement de levée (30) dans le sens axial, un premier (K1) et un second (K2) groupe de têtes étant prévus sur le tambour de têtes (8) en étant décalé dans le sens axial (31), **caractérisé en ce** que les deux groupes sont positionnés sur le tambour des têtes (8) en étant réglables l'un par rapport à l'autre dans le sens axial (31) au moyen d'un actionneur électromécanique (A).

2. Enregistreur selon la revendication 1, **caractérisé en ce** que l'actionneur (A) et/ou le mouvement de levée (30) est commandé par une variable réglante (U2, U1) qui est obtenue par un signal de poursuite de piste balayé par la bande (15).

3. Enregistreur selon la revendication 1, **caractérisé en ce** que le mouvement de levée (30) est commandé de manière telle que le premier groupe (K1) de têtes suit les pistes (S) enregistrées sur une première moitié (H1) de la bande (15).

4. Enregistreur selon la revendication 3, **caractérisé en ce** que l'actionneur (A) est commandé simultanément avec la commande du premier groupe de têtes par le signal de poursuite de piste de telle manière que le second groupe (K2) de têtes suit les pistes enregistrées sur la seconde moitié (H2) de la bande (15), sans tenir compte de leur nombre ordinal, par rapport au nombre ordinal des pistes lues simultanément par le premier groupe (K1) de têtes sur la première moitié (H1) de la bande.

5. Enregistreur selon la revendication 3, **caractérisé en ce** que l'actionneur (A) est commandé de telle manière que les deux groupes (K1, K2) de têtes lisent toujours des pistes (S) de même nombre ordinal sur les deux moitiés (H1, H2) de la bande (15).

6. Enregistreur selon la revendication 4, **caractérisé en ce** qu'à la reproduction les différences dans le nombre ordinal temporel des signaux lus simultanément par les deux groupes (K1, K2) de têtes sont compensées par des mémoires.

7. Enregistreur selon la revendication 1, **caractérisé en ce** que les têtes du second groupe (K2) sont placées sur des actionneurs séparés (A) ou sur un actionneur commun (A).

8. Enregistreur selon la revendication 7, **caractérisé en ce** que les actionneurs séparés (A) sont identiques et commandés avec le même signal (U2).

9. Enregistreur selon la revendication 1, **caractérisé en ce** que l'écart des deux groupes (K1, K2) de têtes dans le sens axial (31) du tambour des têtes (8) est à peu près égal à la moitié de la largeur géométrique (H1, H2) de la bande (15).

10. Enregistreur selon la revendication 1, **caractérisé en ce** qu'à l'enregistrement la commande de l'actionneur (A) est mise hors circuit.

Fig.1

7

Fig. 2